Europäisches Patentamt

**European Patent Office**

**Office européen des brevets**

(11) Publication number: **0 066 873**
A1

## (12) EUROPEAN PATENT APPLICATION

(21) Application number: **82104962.4**

(22) Date of filing: **07.06.82**

(51) Int. Cl.³: **B 62 H 3/02**

(30) Priority: **08.06.81 US 271354**

(71) Applicant: **Messing, Marc, 1105 Park Street, N.E. Washington, D.C. 20002 (US)**

(43) Date of publication of application: **15.12.82 Bulletin 82/50**

(72) Inventor: **Messing, Marc, 1105 Park Street, N.E. Washington, D.C. 20002 (US)**

(74) Representative: **Abitz, Walter, Dr.-Ing. et al, Abitz, Morf, Gritschneder, Freiherr von Wittgenstein Postfach 86 01 09, D-8000 München 86 (DE)**

(84) Designated Contracting States: **BE DE FR GB IT NL SE**

(54) **Support bracket-wall shelf unit.**

(57) A combination support bracket-wall shelf unit (10) particularly for mounting of a bicycle thereon (20), the unit including a vertical plate (12) for mounting it to a wall surface (38) and an upper horizontal plate (40) extending outwardly from the wall (38), the edge section of the upper plate (40) including a grooved socket (18) for receiving and supporting a major portion of the course run of the bicycle crossbar (20), the upper plate surface (40) rearwardly of such socket serving as a shelf for reception of a variety of articles.

SUPPORT BRACKET-WALL SHELF UNIT

Bicycle riding has become a more popular activity in recent years both because of the relaxation it affords and the beneficial exercise associated with such endeavor. However, the convenient storage of a bicycle during periods of non-use presents a problem to many bicycling enthusiasts and particularly those living in apartments or cooperatives where parking spaces such as garages, storerooms and the like are not readily available. Moreover, many bicyclists prefer to store their bicycle in their living space because of the security it offers against possible theft of the bicycle. Since living space, particularly in apartments and spaces therein close and convenient to the apartment entrance, generally do not allow taking up floor space to park a bicycle, it is desirable and known to wall mount the bicycle by hanging it on a set of brackets or hooks. Such brackets and hooks as have been used do not lend themselves to having functional purpose combined with attractiveness of appearance or the further utility of serving as a storage means for other articles associated with bicycling, i.e., they do not embody a support means such as a shelf on which the cyclist could store a helmet, lock, gloves and the like, nor do they offer the structural stability of a single continuously molded unit.

SUMMARY OF THE INVENTION

The present invention relates to a combination support bracket-wall shelf unit readily mountable on a wall or like partition surface and adapted to receivably supporting a bicycle with a major course portion of the bicycle crossbar supported in full contact in and with an elongated groove formed in the unit. Additionally, an expansive generally flat surface is provided adjacent the groove on which other articles, e.g., a rider's safety helmet or a decorative article, such as a vase, can be received. The support bracket-wall shelf unit is characterized by an elongated, generally flat plate segment in normal orientation vertically disposed and readily closely abuttable against a wall surface for effecting securement of the unit to the wall. A substantially arcuate segment generally coextensive with said plate segment extends upwardly therefrom and transits a curved course away from the wall to joinder with a second, horizontally disposed elongate and substantially coextensive flat plate segment, the edge section of said second plate segment distal from the wall being shaped as a deepened groove or depression running the full elongate expanse of such second plate segment. In a preferred form, the two plate segments and arcuate segment are an integral one-piece structure of high strength but resilient construction. A particularly preferred structure is one formed as a wood pressure laminate in the desired configuration with plural plys, e.g., five, seven or more plys, at least some of which are constituted as a core which in turn is sandwiched between others of the plys. The elongate expanse of the unit can vary depending on the size of the top tube or horizontal crossbar of a bicycle to be mounted thereon but for most applications will be about sixteen or seventeen inches to accomodate crossbar lengths of most bicycles and yet provide for full support thereof along a major portion of the crossbar run, "major portion" herein being understood to mean at least about one-half or more of such crossbar run. An elongate dimension of seventeen inches or more is convenient in that it allows centering wall fastener openings in the first plate segment on sixteen inch centers compatible with wall mounting of the unit on wall studs.

In use, a bicycle is mounted for storage by lifting it above the flat plate segment and nesting the crossbar thereof in the socket or groove at the edge section of such plate segment. In such mounted position, the bicycle is securely held and the front wheel can be trained into alignment with the rear wheel to present an orderly and physically attractive storing of the bicycle. Additionally, the broad, flat surface of the horizontal plate segment serves to receive other articles as desired.

BRIEF DESCRIPTION OF THE DRAWING

The invention will appear more clearly from the following detailed description taken in conjunction with the accompanying drawing in which:

Fig. 1 is a perspective view of a combination support bracket-wall shelf unit constructed in accordance with the principles of the present invention, there being depicted, in phantom short and long lines, the course run of a tube type or horizontal crossbar of a bicycle, the major portion of the course run being supported on the unit.

Fig. 2 is a side elevational view of the unit shown in Fig. 1 as securably attached to a vertical wall, a bicycle crossbar being shown received in the socket at the tip end of the horizontal plate segment.

Fig. 3 is a front elevational view of the unit in wall mounted position.

Throughout the following description, like reference numerals are used to denote like parts in the drawing.

## DESCRIPTION OF THE PREFERRED EMBODIMENT

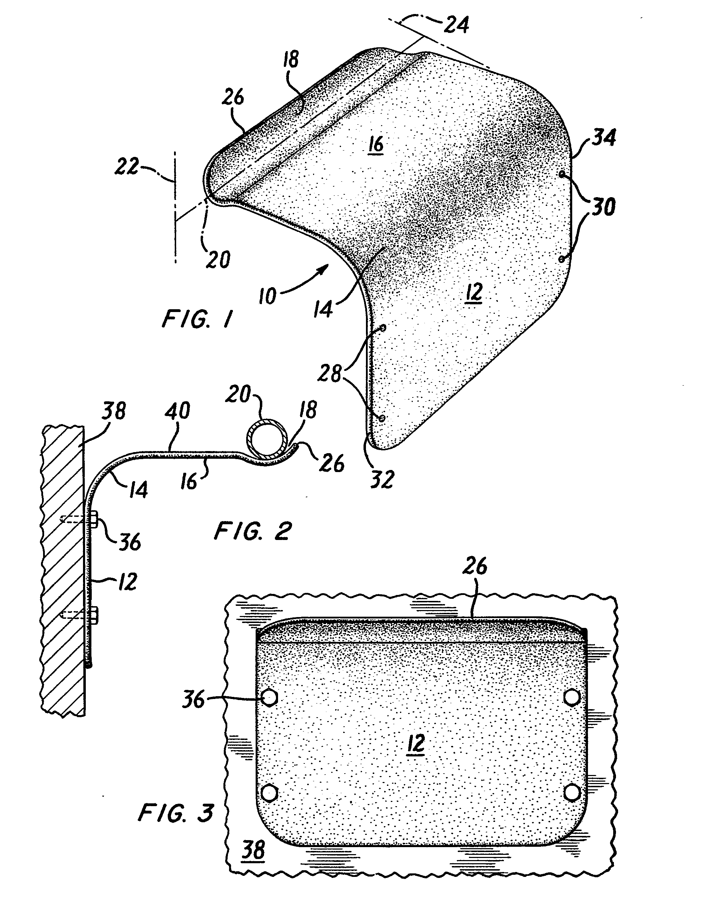

Referring now to the drawing and Figs. 1-3, the combination support bracket-wall shelf unit 10 is comprised of a preferably single piece structure having one generally flat, relatively thin, elongate plate segment 12 which in Fig. 1 is disposed in normal vertical orientation and the top of which merges in joinder with an arcuate sectioned merger segment 14 which in turn is joined with a generally horizontally disposed plate segment 16 so that this plate segment is disposed in generally right angle relationship with plate segment 12, the respective segments being of substantially uniform thickness and, as best noted in Figs. 1 and 3, of coextensive elongate expanse. The edge section of plate segment 16 remote from merger segment 14 is formed with a grooved depression 18 which serves as a socket to receive the crossbar 20 (Fig. 2) of a bicycle. It will be understood and with reference to Fig. 1, that the crossbar is the bicycle frame component which extends between and is fixedly secured to the fork tube 22 and seat tube 24 of the bicycle frame. Socket or depression 18 can be formed as a somewhat shallow arcuate depression as depicted and in which event the tip end 26 of the plate segment 16 desirably extends at least slightly above the planar upper surface of such plate segment to enhance holding embrace on the crossbar, or it can be of a deeper, smaller radius to thereby accomodate reception of a greater vertical measure of the crossbar, although the depicted shallower depression

in an actual embodiment was fully effective to securely retain the crossbar.

The unit 10 and more particularly plate segment 12 is as shown in Fig. 1, provided with fastener receptive openings 28, 30 adjacent the respective elongate defines of the unit, i.e., adjacent end edges 32, 34. It is particularly advantageous to center the openings 28, 30 on sixteen inch centerlines to accomodate wall mounting of the unit on wall studs. Figs. 2 and 3 show how fasteners 36 are employed to secure the unit to a wall 38 in which position plate segment 12 closely abuts wall 38.

The depicted unit in an actual embodiment was made with an elongate expanse of seventeen inches and thus socket 18 was adapted to receive and support substantially the full course run of a bicycle crossbar, representative length of such crossbar run being twenty or twenty-one inches. In the actual embodiment, the vertical height of the unit from the lower edge of plate segment 12 to the upper surface of plate segment 16, and the horizontal depth from tip end 26 to wall abutting faces of plate segment 12 were each substantially twelve inches. A twelve inch depth permits ample clearances for the handle bars and pedals of many bicycles with triangle frames to preclude obstruction thereto by the wall surface when the bicycle is mounted on the unit.

It will be appreciated that the dimensional characteristics given above are not limiting but are to be taken as representative for the unit as used in conjunction with mounting of a large number of bicycle types. In general, the elongate expanse of the unit could be in a range of lengths lesser or greater than sixteen or seventeen inches and as required for supporting a major portion of the crossbar runs of various sized bicycles.

With unit 10 mounted on a wall 38 and with a bicycle received thereon, there remains ample room on the top surface of plate segment 16 as at 40 for reception of articles such as a helmet, chain and lock or the like, thereby giving the unit the added utility of serving as a wall shelf.

As indicated above, the unit 10 preferably is made as a one-piece unit. It is particularly advantageous to produce it as a wood component and more particularly as a shaped wood laminate comprised of plural plys, e.g., five, seven or more layers, certain of which constitute the core and others of which sandwich the core therebetween. In such applications, various gums, and woods such as birch and maple can be used for the cores and cross bands. A wide variety of wood and plastic veneers such as birch, maple, walnut, rosewood, mahogany and high pressure laminate plastics can be used to cover the cores. Attractive surface design can be applied to the unit, particularly where plastic laminates are used at the outer surfaces so that the unit in addition to its functional utility can be of decorative character within the space where it is used.

While there is disclosed above but one embodiment of the support bracket-wall shelf of the present invention, it will be apparent that various modifications can be made therein without departing from the scope of the inventive concept disclosed.

WHAT IS CLAIMED IS:                    7

1. Support bracket-wall shelf unit (10) for mounting a bicycle thereon, characterized by a pair of elongated, generally flat plate segments (12,16) arranged in substantially right-angular relationship, and joined by an arcuate merger segment (14) of corresponding elongate expanse, one of said plate segments (12) being adapted for mounting to a wall surface in close abutment therewith and the other plate segment (16) disposed thereabove and extending outwardly horizontally from said wall surface, the edge section of said other plate segment remote from said wall surface having a grooved depression (18) defining a socket for receiving and supporting a major portion of the course run of the crossbar (20) of a bicycle, the said other plate segment surface extending rearwardly from said edge section defining an article receiving shelf surface.

2. The support bracket-wall shelf unit of claim 1 characterized by said one plate segment being provided with wall fastener receptive openings adjacent each of the elongate defines thereof for mounting of said unit to the wall.

3. The support bracket-wall shelf unit of claim 2 characterized by the opening being elongatedly spaced on centers of substantially sixteen inches.

4. The support bracket-wall shelf unit of claim 1 characterized by said grooved depression being of arcuate cross-section.

5. The support bracket-wall shelf unit of claim 5 characterized by the tip end of said edge section of said other plate segment extending above the plane of such plate segment rearwardly extending surface.

6. The support bracket-wall shelf unit of claim 1 characterized by said plate segments and said merger segment being of single piece unitary structure.

7. The support bracket-wall shelf unit of claim 6 characterized by said single piece unitary structure comprising a plural ply, pressure laminated wood component including a core and veneer layers sandwiching said core therebetween.

8. The support bracket-wall shelf unit of claim 7 characterized by a thermoplastic outer veneer layer intimately covering each side of said wood component.

9. The support bracket-wall shelf unit of claim 3 characterized by the height of said unit from the lower edges of said one plate segment to the upper horizontal surface of said other plate segment, and the depth of said unit from the tip edges of said other plate segment edge section to wall abutting face of said one plate segment are each substantially twelve inches.

0066873

FIG. 1

FIG. 2

FIG. 3

European Patent
Office

**EUROPEAN SEARCH REPORT**

0066873

Application number

EP 82 10 4962

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | GB-A-1 571 147 (HÜGEL) *Figures 1 and 2; page 1, line 55 - page 2, line 4* | 1 | B 62 H 3/02 |
| A | GB-A-1 012 908 (ROTHWELL) *Figure 1; the whole document* | 1,6 | |
| A | GB-A-1 077 792 (HANKIN) *Figure 4; the whole document* | 1,2,6 | |
| A | CH-A- 238 613 (UTIGER) *The whole document* | 1,4 | |
| A | DE-C- 459 286 (MÜLLER) | | |
| A | GB-A- 18 355 (JAHN)(1899) | | |
| A | US-A-3 981 491 (SNYDER) | | |

| TECHNICAL FIELDS SEARCHED (Int. Cl. ³) |
|---|
| B 62 H A 47 B B 25 H |

The present search report has been drawn up for all claims

| Place of search | Date of completion of the search | Examiner |
|---|---|---|
| THE HAGUE | 12-08-1982 | GEMMELL R.T.D. |